# EUROPEAN PATENT SPECIFICATION

(11) **EP 2 350 944 B1**
(45) Date of publication and mention of the grant of the patent: **05.03.2014**
(21) Application number: 09825045.9
(22) Date of filing: 28.10.2009
(51) Int. Cl.: H04W 12/06, H04W 12/12, H04L 29/06

(54) **TRANSACTION VERIFICATION METHOD, AUTOMATIC TRANSACTION VERIFICATION SYSTEM AND TRANSACTION VERIFICATION UNIT (VARIANTS)**
TRANSAKTIONSVERIFIKATIONSVERFAHREN, AUTOMATISCHES TRANSAKTIONSVERIFIKATIONSSYSTEM UND TRANSAKTIONSVERIFIKATIONSEINHEIT (VARIANTEN)
PROCÉDÉ DE VÉRIFICATION DE TRANSACTIONS, SYSTÈME AUTOMATIQUE DE VÉRIFICATION DE TRANSACTIONS ET UNITÉ DE VÉRIFICATION DE TRANSACTIONS (VARIANTES)

(30) Priority: 06.11.2008 RU 2008143735
(43) Date of publication of application: 03.08.2011
(73) Proprietor: Rozhkov, Alexander Gennadievich, Moscow 111555 (RU)
(72) Inventor: Rozhkov, Alexander Gennadievich, Moscow 111555 (RU)
(74) Representative: Anohins, Vladimirs
(86) International application number: PCT/RU2009/000582
(87) International publication number: WO 2010/053405

(56) References cited:
- WO-A1-2005/045649
- WO-A2-02/37240
- FR-A1- 2 795 897
- RU-C2- 2 296 367
- RU-C2- 2 301 449
- US-A1- 2007 107 044

## Description

The invention relates to identification means, namely methods and devices for multi-factor verification of transactions made over the telephone.

Transaction parties are generally the first party initiating a transaction, e.g. a bank client, and the second party interested in transaction verification results, e.g. a bank, and the third party performing transaction verification and delivering the result to the second party, e.g. a processing center. In one of the schemes the second and the third parties are combined.

In suggested schemes and devices phone clear-back and answer signals are used as main or additional factors for identification of personality and intentions of transaction initiator.

Inter alia the invention can be used to verify a person's consent to perform an action aimed at transfer of title to the object of transaction in civil circulation. The object of transaction may be material valuables includ money, securities, and goods. Alternatively, the object of transaction can be a delivery permission to a person of information access which is restricted to a limited number of persons; or verification of significant facts, such as authorship of a document, or a person's consent to an action. Thus the invention may be used to authenticate document authorship, and to authenticate a person participating in a process.

The invention may be used to verify payment transactions, transactions in "client-broker" and "client-bank" systems, Internet authorization operations, third-party requests of access to private data, as well as to enable a customer to optionally endorse digital documents with an electronic signature by means of a cell phone.

### BACKGROUND OF THE INVENTION

Published U.S. patent application 2003/0061163 A1 describes permission verification system and method for credit or debit card use by cardholder during transaction. The minimum system configuration includes a seller's modem, a cardholder's modem, a processing center modem, a database server modem, a private telephone communicator, a database server, and a database. When a credit card is used in a remote sales terminal the seller's modem simultaneously transmits encoded information from the credit card to processing center modem and to the cardholder's modem. As soon as the processing center receives the transaction information from the seller, it transmits the transaction data to the database via modem, private telephone communicator, and database server, and waits for an encoded digital authorization or refusal signal for the transaction from the cardholder. The cardholder chooses an option in IVR (Interactive Voice Response) menu by pressing the corresponding key on his phone; after that the cardholder's modem transmits the cardholder's choice via a public telephone network simultaneously to the seller's modem, to the processing center modem, and to the database via modem, private telephone switchboard, and database server. The database server saves all transaction data in digital format. If the amount on the debit card is not sufficient, or the credit card limit is exceeded, the processing center is programmed to send a digital signal via modem and public telephone network to the seller's modem about the transaction cancellation, regardless of instructions received from the cardholder via modem.

A shortcoming of aforementioned system is its hardware complexity. It requires two modems on the seller's side for simultaneous communication with the cardholder and the processing center; three modems on the cardholder's side for simultaneous transmission of the cardholder's decision to the seller's modem, to the processing center modem, and to the database; as well as a device transmitting incoming signals via modem to the IVR automatic informer playing back voice files for the cardholder and registering the cardholder's choices. Another shortcoming of the existing system is the considerable amount of time required to coordinate every payment transaction. Transaction completion requires four modem connections, IVR menu playback for the cardholder, and waiting for the cardholder's reply. The cost of transaction verification is increased because of the high per-minute cost of connection in public switched telephone networks.

International publication WO 2006/099081 A2 describes a banking account management system and method. When someone requests access to the client's account, the client is notified of such request by a call to the client's number. When the voice connection with the client is being established the system asks the client for the PIN (Personal Identification Number) by playing back the voice file by IVR automatic informer. If the client enters the correct PIN the access to the client's account is granted.

A shortcoming of this system is the high cost of receiving payment transaction verification because of the high per-minute cost of connection in public switched telephone networks, it being necessary for the client to memorize the PIN in order to use the system, as well as the fact that the system cannot be used for small amount payments, because the cost of verification can exceed the transaction amount.

General shortcomings of the existing systems is the long duration of dial-up connection, high requirements to the user's knowledge of verification service infrastructure, dependence of verification results on client's accidental input errors, and verification's being multi-stage and slow. Existing multi-stage methods can be significantly inconvenient for mobile-phone users on the move e.g. while driving, riding in the subway between stations etc. These shortcomings make multi-stage transaction verification difficult to implement e.g. for verification of routine private operations (the complexity of verification is annoying for users), and for verification of exchange operations requiring instantaneous reaction of a player to the rapidly changing market situation.

So, there still is an unmet demand for means of efficient transaction verification with low per-instance cost requiring minimum participation by the user in the verification process.

### SUMMARY OF THE INVENTION

The invention offers methods and devices in which a clear-back signal and an answer signal of the subscriber device connected to the automated switched telephone network are used as primary or secondary factor of identification of personality and intentions of the transaction initiator. The invention may be used inter alia for confirmation or verification of transactions initiated by the unauthorized person or by the person authorized by existing authorization factors, by means of the subscriber device of the person authorized to make the transaction. The technical result is the fact that an authorization factor is offered that does not require connection traffic in the automated switched telephone network when such network is used for confirmation or verification of transactions.

### DESCRIPTION OF THE INVENTION

As used herein, "transaction" means a process in which at least two parties participate and which ends in successful or unsuccessful obtaining of a predetermined result. Success or faiture to obtain the result are subject to at least one transaction requirement.

As used herein, "transaction requirement" means a provision which can be related to material values or to certain information, and which is subject to verification by means of this invention.

Transaction requirements include, without limitation, the following facts: a person's having a title, authorship, a right to dispose of a material object on behalf of an authorized person, a person's having official authority, a person's having the right to access the information, and a person's willingness to perform a certain action.

A transaction may have several requirements, e.g. a person's having the right to perform an action and a person's willingness to perform a certain action. In such case the transaction result is obtained only after meeting each of the transaction requirements.

As used herein, "transaction result" means an action performed in case of a successful completion of a transaction; said action having been defined prior to the transaction initiation.

Transaction results may be the following actions, without limitation: money transfer from one account to another, gaining access to information, verification of authorship of an electronic document, software execution and activation of any device.

As used herein, "transaction information" means any information related to the transaction parties, transaction requirements, and transaction result. Information on transaction parties includes without limitation a commercial name, a name of a legal entity, a trade mark, a service mark, a service name, a physical person's name. Information on transaction result includes without limitation the following payment information: beneficiary's name, payer's account number, payment currency; information on document: document number and date; information on software: software name and name of the software supplier. Information on transaction requirements includes explanations of the actions which shall be performed to meet the transaction requirement

As used herein, terms "authorization", "verification", and "validation" are interchangeable and denote a process of checking conformity of an anonymous person with a defined criterion. In case of success an anonymous person is identified as the person characterized by predetermined registration data: name, unique number and scope of authority.

As used herein, "the party authorized to make the transaction", or "the authorized party" means a physical person or a legal entity, or their representatives, or a group of jointly acting persons, or a means by which said persons are represented in electronic environment. The authorized party has the unique identification data formed prior to transaction verification. Such data may include a person's name, a name of a legal entity, or other data making it possible to tell a person from other persons the information on which is used in the invention.

As used herein, "the party initiating the transaction", or "the initiating party" or "the verified party" means a physical person or a legal entity, or their representatives, or a group of jointly acting persons, at whose will a transaction is being initiated. As a specialist will realize, a person's willingness to make a transaction may be expressed by various means and does not necessarily require direct intervention and/or awareness of the initiating party of a transaction being initiated at this party's will. This can be illustrated by mechanical trading systems making trading decisions depending on results of technical analysis of the stock exchange share quotations. As a specialist will realize, "the initiating party" can coincide with "the authorized party" if a transaction is initiated and confirmed by the same person. However "the initiating party" and "the authorized party' cannot coincide, inter alia, if a transaction is initiated by a dishonest person, or if there is a prior agreement between an authorized party and an honest transaction initiator (for example, if the transaction initiator is a child, and the authorized party is one of the child's parents).

As used herein, "the party verifying transactions", or "the verifying party" is a party by means and by effort of which the transaction requirement verification is performed. The means of transaction verification is an automated infrastructure including a system of interacting software and hardware described below.

As used herein, "the transaction effector party", or "the transaction effector" means a party by means and by effort of which the transaction result is obtained.

Transaction effectors can be, without limitation, the following parties: a bank or a payment system (if the transaction results in a transfer from one account to another), a broker (if the transaction results in a purchase or a sale of securities), a car anti-theft system (if the transaction results in switching the monitoring off), a web or a WAP resource (if the transaction results in authorization at the web- or the WAP resource and/or in gaining access to information content of a web or WAP resource), a rightholder (if a transaction results in a permission to use copyrighted material or software), a physical person or a legal entity (if the transaction results in an endorsement of a document or in permission to use an encrypted file or such property as a personal computer, an automobile, a safe, a DVD).

As used herein, "automated switched telephone network", or "phone network," means at least one public telephone network, such as a stationary public telephone network, or a mobile telephone network, or a combination of the above.

In accordance with the invention the telephone network that the verifying party's device is connected to (verifying party's telephone network), and the telephone network that the authorized party's device is connected to (verified party's telephone network) can be the same network or different networks. Verified party's telephone network is a mobile telephone network. Telephone networks of verifying and verified parties can be connected directly or, not necessarily, by means of one or several telecommunication data transfer channels. In one implementation scheme the telecommunication channel is another telephone network. Whether telephone networks of verifying and verified parties coincide or differ, and regardless of availability, type, quantity and connection sequence of telecommunication channels, the telephone network as a whole provides for addressing a caller and a called party, for transmission of the caller's address and bidirectional transmission of clear-back and answer signals between a caller and a called party.

In one embodiment of the invention the telephone network uses communication standard selected from the group consisting of GSM (Global System for Mobile Communications), GPRS (General Packet Radio Service), CDMA (Code Division Multiple Access), AMPS (Advanced Mobile Phone System), EV-DO (Evolution-Data Optimized), EDGE (Enhanced Data Rates for GSM Evolution), 3GSM (UMTS - Universal Mobile Telecommunications System, e.g. ITU IMT-2000), DECT (Digital Enhanced Cordless Telecommunications), IS-136/TDMA (Digital AMPS), 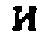 iDEN (Integrated Digital Enhanced Network).

In one embodiment of the invention the telephone network is a satellite telephone network.

As used herein, "telecommunication channel"; or "data transfer channel" is a means of electronic data transfer (i.e. by electric or radio signals) having at least two end terminals adapted for data transfer between the units connected to them. Telecommunication channel has a predetermined structure and specifications of electric signals and functions in accordance with a physical level protocol, i.e. first-level protocol, according to the seven-level ISO/OSI model. Data transport in telecommunication channel is carried out according to existing protocols of channel, network, transport, session, representation, and applied levels in seven-level ISO/OSI model (see e.g. ISO/IEC 7498-1:1994 and ITU-T Recommendation X.200, 1994).

Data transfer units can be telephone networks or telecommunication channels functioning in accordance with other protocols of physical, channel, network, transport, session, representation, and/or applied levels, or unit elements, in accordance with methods and devices as per the present invention.

In one embodiment of the invention the telecommunication channel uses a physical level protocol selected from the group consisting of V.92 (see ITU-T V.92), IRDA, USB, Firewire, EIA RS-232, EIA-422, EIA-423, RS-449, RS-485, DSL, ISDN, Ethernet (see IEEE 802.3 standards), SONET/SDH, GSM radio interface, Bluetooth, IEEE 802.1x Wi-Fi, Etherloop, MTP-1 (Message Transport Protocol), MTP-2, MTP-3.

In a preferred embodiment of the invention the telecommunication channel uses a transport level protocol selected from the group consisting of Ethernet and ISDN.

In one embodiment of the invention the telecommunication channel uses a transport level protocol selected from the group consisting of AEP (AppleTalk Echo Protocol), ATP (AppleTalk Transaction Protocol), CUDP (Cyclic UDP), DCCP (Datagram Congestion Control Protocol), FCIP (Fiber Channel over TCP/IP), FCP (Fiber Channel Protocol), IL (IL Protocol), iSCSI (Internet Small Computer System Interface), LCP (in PPP, Link Control Protocol), NBF (NetBIOS Frames protocol), NBP (Name Binding Protocol), RTMP (Routing Table Maintenance Protocol), SCSI (Small Computer System Interface), SCTP (Stream Control Transmission Protocol), SPX (Sequenced Packet Exchange), SST (Structured Stream Transport), TCP (Transmission Control Protocol), UDP (User Datagram Protocol), UDP Lite, SCTP (Stream Control Transmission Protocol), RSVP (Resource ReSerVation Protocol).

In a preferred embodiment of the invention the telecommunication channel uses a transport level protocol selected from the group consisting of TCP and UDP.

In one embodiment of the invention the telecommunication channel uses a channel level protocol selected from the group consisting of ATM (Asynchronous Transfer Mode), PPP (Point-to-Point Protocol, see e.g. IETF RFC 1661).

In one embodiment of the invention the telecommunication channel uses a network level protocol selected from the group consisting of X.25 (see e.g. ITU-T Recommendation X.25).

In one embodiment of the invention the telecommunication channel uses a telecommunication protocol selected from the group consisting of SS/7 (Signaling System #7, see e.g. ITU-T Recommendation Q.700), and ISDN (Integrated Services Digital Network), WiFi (see e.g. IEEE Standard 802.11).

In one embodiment of the invention the telecommunication channel connecting the telephone network of the verifying party with the telephone network of the verified party functions according to a standard selected from the group consisting of Ethernet, WiFi (see e.g. IEEE Standard 802.11) Bluetooth (see e.g. IEEE Standard 802.15), ATM (Asynchronous Transfer Mode), SS/7 (Signaling System #7; see e.g. ITU-T Recommendation Q.700), X.25 (see e.g. ITU-T Recommendation X.25), WiMAX (Worldwide Interoperability for Microwave Access, see e.g. IEEE Standards 802.16-802.16e), SCCP (Signalling Connection Control Part), DUP (Data User Part), B-ISUP (B-ISDN User Part), ISUP (ISDN User Part), TUP (Telephone User Part), TCAP (Transaction Capabilities Application Part), SSCOP (Service-Specific Connection Oriented Protocol), H.323, SIP (Session Initiat Protocol), BICC (Bearer Independent Call Control protocol), IS-41, IS-634, CAS, CS1, CS2, R2, CAMEL (Customized Applications for Mobile network Enhanced Logic), INAP (Intelligent Network Application Part), MAP (Mobile Application Part).

In one embodiment of the invention the telecommunication channel uses TCP/IP (Transmission Control Protocol/Internet Protocol, see IETF RFC 1122).

In one embodiment of the invention the telecommunication channel connecting the telephone network of the verifying party with the telephone network of the verified party uses a VoIP (Voice over Internet Protocol) protocol for data transport.

In accordance with the invention, for digital data transmission between telephone networks via telecommunication channels, any suitable digital data transmission can be used-the ones mentioned above as well as the ones known to specialists in this area.

As used herein, "the subscriber address" means a user's telephone number in a public switched telephone network (see Ray Horack, Webster's New World® Telecom Dictionary, Wiley Publishing, Inc., 2007, ISBN 978-0-471-77457-0).

As used herein, "the clear-back signal' means an electric signal normally used in a telephone network when a called party refuses to answer an incoming call (rejects a call signal) after or during receiving an incoming call signal. Thus, a clear-back signal herein does not include a disconnect signal, i.e. a clear-back signal of a caller and/or of a called party sent during a connection.

As used herein, "the answer signal" means an electric signal normally used in a telephone network to inform a caller on a called party's agreement to answer an incoming call after or during receiving an incoming call signal.

For detailed information on telephone network signal system see e.g. GOST (State Standard Specification) 23595-79.

As used herein, "the caller information" in the context of sending the data about a caller by means of the subscriber device of the authorized person, means the set of data unambiguously corresponding to the subscriber address of the caller.

In one embodiment of the invention the caller information is the subscriber address.

In another implementation scheme the caller information is the Caller ID.

In yet till another embodiment the subscriber device of the authorized party includes a means for displaying a predetermined pictogram and/or playing back a predetermined phonogram corresponding to the corresponding user's number or to the Caller ID of the caller. It enables the user to crate easy-to-remember identifiers in order to distinguish the calls of the verifying party from other calls.

As used herein, "the subscriber device of the party verifying a transaction", or "the verifying party subscriber device", denotes a means for gaining access to a public telephone network providing for transformation of analog and/or digital signals of said network into digital signals compatible with a digital processing device, such as a computer.

The verifying party subscriber device can be a modem. As a specialist will realize, the modem has to be of a type compatible with the telephone system that the verifying party subscriber device is connected to. So, one can use any number of GSM modems, WiFi modems, WiMax modems, 3G modems, 4G modems, satellite modems, radio modems, ADSL modems, ISDN modems, X.25 modems.

As used herein, "the subscriber device of the party authorized to make a transaction", or "the authorized party subscriber device", denotes a mobile means for gaining access to a public telephone network. According to the invention the authorized party has at least the right to use said subscriber device. As a specialist will realize, the authorized party subscriber device has to be of a type compatible with the telephone network that it is connected to.The authorized party subscriber device is a telecommunication device selected from the group consisting of a mobile telephone, a cell telephone, a PDA (Personal Digital Assistant), and a personal computer equipped with a modem.

According to the invention, the authorized party subscriber device can convey information about the caller and is capable of transmitting clear-back and answer signals.

As used herein, "the data storage" means a totality of software and hardware for arranged storage, allocation and modification of data within data structures where each entry unambiguously corresponds to another entry.

In other words, a data storage is a relation database or several interconnected relation databases, as well as means of access to these databases. Database access means includes hardware and software. The hardware includes at least one digital data medium with an electronic access interface and with at least one database present, as well as one or several means of automated digital processing connected to said medium via said interface and equipped with an arithmetic and logic unit.

Data storage software includes at least one database management system (DBMS) providing for allocation, retrieval, and modification of data in said databases. Examples of existing DBMS are MS SQL Server, MySQL, Oracle DBMS, Firebird, Interbase, Sybase, PostgreSQL.

Preferred means of automated digital processing is a database server or several database servers connected by telecommunication channels. The database server or several interacting database servers provide for functionality of said DBMS.

Regardless of the large number of combinations of the above-mentioned means, i.e. specific schemes of database storage, the present invention includes only the functional combinations that are obvious to a specialist, that is one database or several interacting databases managed by one or several DBMS. Said databases are located on one/several digital data medium (media) which in turn is (are) connected to one or several means of automated digital processing.

As used herein, "the reading device" means a device for transforming authorization factor recorded on a medium into electronic analog or digital form for subsequent transmission via the telecommunication channel.

According to the invention, any reading device compatible with the authorization factor medium can be used, such as a magnetic card reader, a barcode scanner, and a radio-frequency identifier reader.

Authorization factor medium can be any data medium, preferably a plastic card with a magnetic strip, a transponder, a plastic card with a microchip. The authorization factor medium can be a body part, such as a finger or an iris, the vocal tract (lips, mouth, tongue, throat, trachea, lungs), the brain (knowledge of token, digital combination, ID).

As used herein, "identification factor of a party initiating a transaction", or "authorization factor", or "identifier of the party initiating a transaction", or "identification data", means any information identifying the person of the transaction initiator.

The authorization factor can be for instance be a biometrical parameter such as a fingerprint, an iris pattern, hand geometry; digital identification means such as a number recorded on a plastic card with a magnetic strip, a letter/number combination (token), a radio-frequency identifier (RFID).

Identification data can be recorded on a digital medium such as a card with a magnetic strip, a card with a microchip, a transponder, a digital optical disk, a barcode. Alternatively identification data are known to the transaction initiator and can be entered into the electronic environment by an input-output device such as a keyboard.

According to the present invention clear-back and answer signals of the subscriber device in the automated switched telephone network are used as authorization factors. They make it possible to identify the party initiating a transaction as the party authorized to make a transaction. The invented authorization factor makes it possible to use for transaction verification just the signal traffic of the automated switched network and does not depend on the signal quality, telephone network capacity, user equipment and the equipment of the verifying party such as the capacity to form DTMF signals, to perform text message transmission, IVR message playback etc. The invented authorization factor does not require expensive connection traffic in the automated switched telephone network. The invented authorization factor simplifies and accelerates the authorization process by means of the subscriber device. It minimizes the possibility of the user's error typical for existing multi-stage authorization procedures. Technical simplicity of this solution makes it possible to accelerate, and to increase reliability of, authorization process by means of exclusion of connection delays and interruptions caused by data transmission errors in noisy telephone networks.

The invented authorization factor can be used not only as a supplementary authorization factor but as the only authorization factor as well. Implementation of the invented authorization factor as a supplementary authorization factor inter alia increases security of transactions connected with material value title transfers, and decreases the possibility of unauthorized transactions made by an unauthorized person.

The present invention relates to a method and corresponding automated system for verification of the consent of the party authorized to make the transaction to the making of the transaction by the party initiating the transaction as defined by the independent claims.

In one embodiment, the identifier of the party initiating the transaction is a personal identification number, a login, a password, a bank card number, a radio-frequency identifier (RFID), or a biometrical parameter.

In a preferred embodiment, the radio-frequency identifier is read from a transponder.

In another preferred embodiment the automated switched telephone network includes at least one mobile telephone communication network.

In a more preferred embodiment the mobile telephone communication network uses the GSM standard.

In one embodiment of the present invention, after step (f) and before step (g) an additional message is sent to the subscriber device of the party authorized to make the transaction, the message being selected from the group consisting of a short message service (SMS) message, zero SMS, a multimedia message service (MMS) message, and a message of a bidirectional session transmission of unstructured supplementary service data (USSD); this message is sent through the subscriber device of said mobile telephone communication network which can receive and transmit said SMS, MMS, and USSD messages.

In a preferred embodiment of the invention, the message contains information about the transaction such as the name of a party acting as the transaction effector, the transaction result, the date of transaction initiation, and/or the time of transaction initiation.

In one embodiment of the invention, the message includes information about the transaction selected from the group consisting of transaction amount, account number, currency, account balance, transaction initiation time, transaction initiation date, transaction beneficiary's name and an electronic digital signature imprint.

In one embodiment of the invention, the subscriber device of the party authorized to make the transaction is a telecommunication device selected from the group consisting of a mobile phone, a cell phone, a personal digital assistant (PDA), and a personal computer equipped with a mobile communication network modem.

In one embodiment of the invention, the call initiated during step (g) is a voice call or a video call.

In one embodiment of the invention, the identifier of the party initiating the transaction is read from a device selected from the group consisting of a magnetic card reader, a barcode scanner, and a radio-frequency identifier reader.

In one embodiment of the invention, information on transactions also includes data selected from the group consisting of transaction amount, account number, currency, account balance, transaction initiation time, transaction initiation date, transaction beneficiary name, and electronic digital signature imprint.

In one embodiment of the invention, the transaction result selected from the group consisting of a money payment, securities transfer, gaining access to private data, and registration on a web site.

In one embodiment of the invention the subscriber device of the party authorized to make the transaction includes a means of conveying information about the caller selected from the group consisting of phonogram playback means, pictogram indication means, letter/number combination (token) indication means, and a combination of the above.

In a preferred embodiment of the invention the device for conveying information about the caller is used for conveying a phonogram, a pictogram, and/or letter/number combination predetermined for the caller's address. This provides for informing the authorized party on the receipt of the verifying party's call requiring an answer.

In a more preferred embodiment, the subscriber address from which the verifying party makes a call to the subscriber device of the authorized party corresponds to the predetermined transaction information. For example when an incoming call is made from number 555-5555, the mobile phone or a PDA can display a message "Payment of up to $100", and when an incoming call is made from number 555-5556 a message "Payment of $500 to $800" is displayed.

In one embodiment of the invention, at least one device for reading identifier of the party initiating the transaction is selected from the group consisting of a magnetic card reader, a barcode scanner, and a radio-frequency identifier reader.

In one embodiment of the invention, the information about a transaction also includes data selected from the group consisting of transaction amount, account number, currency, account balance, transaction initiation time and electronic digital signature imprint.

In one embodiment of the invention, the subscriber device of the party authorized to make the transaction has means to transmit information about the caller through a phonogram, a pictogram, and/or letter/number identifier (token) predetermined for the caller's address.

In one embodiment of the invention the transaction digital processing device includes an arithmetic and logic unit with an input/output device.

In a preferred embodiment of the invention the arithmetic and logic unit is a programmable logic integral scheme.

In one embodiment of the invention the database is an electronic digital medium with an electronic input/output interface.

In a preferred embodiment of the invention the electronic digital medium is selected from the group consisting of a hard-disk drive, a complementary metal-oxide semiconductor (CMOS) chip, and an electrically erasable programmable read-only memory (EEPROM) unit.

In one embodiment of the invention the data storage is a software/hardware complex including a server and a database management system.

In one embodiment of the invention the subscriber device of an automated switched telephone network is a GSM modem.

In another embodiment the data storage is a server with a database, and the database storage control device is a database control system.

### BRIEF DESCRIPTION OF DRAWINGS

Figure 1 is a flow chart of one of the embodiments of the verification system according to the invention, with the use of a cell phone as a subscriber device of an authorized party.
Figure 2 is a flow chart illustrating embodiment of the invention for verification of transactions in which the medium with the initiating party's identifier is a plastic card with a magnetic strip.
Figure 3 is a flow chart illustrating embodiment of the invention for verification of transactions in which the initiating party is identified in electronic environment by means of an executable program within a "Bank-Client" system.
Figure 4 is a flow chart illustrating embodiment of the invention in the world-wide web to verify transactions the object of which is a fact of authorship of transaction initiator.
Figure 5 is a flow chart illustrating embodiment of the invention for verification of transactions having the requirement of transaction initiator's having rights to use a software product or to access information.
Figure 6 is a flow chart illustrating embodiment of the invention for verification of transactions having the requirement of transaction initiator's authorship in relation to an electronic document. Figure 6 illustrates the invention implementation both separately and in combination with an electronic signature.
Figure 7 is a flow chart illustrating embodiment of the invention for verification of transactions having the requirement of transaction initiator's having rights to perform an action relating to an automobile.
Figure 8 shows the algorithm of one of the embodiments.
Figure 9 graphically shows parties participating in a transaction using an example of one embodiment for the banking sector.

### DESCRIPTION OF PREFERRED EMBODIMENTS

The invention will now be illustrated by reference to the following example.

### EXAMPLE 1

### TRANSACTION VERIFICATION SYSTEM

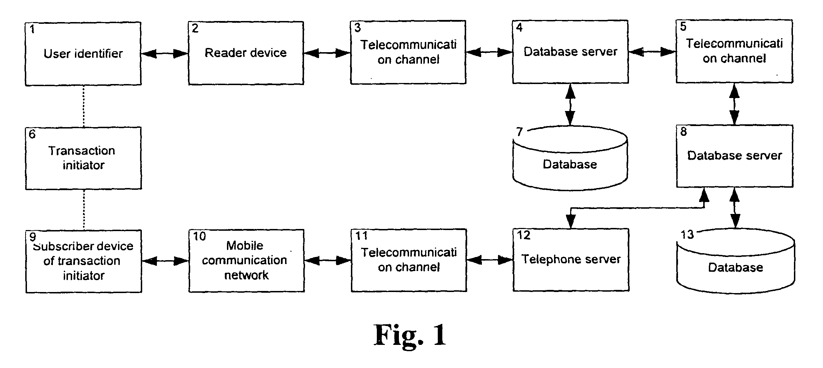

As shown in Figure 1, the transaction verification system includes reader device 2 and transaction digital processing device 4 sequentially connected by means of telecommunication channel 3, database 7 connected to transaction digital processing device 4, database server 8 connected to transaction digital processing device 4 by means of telecommunication channel 5, database 13 connected to database server 8, mobile communication network 10 connected to automated switched telephone network 11, which in its turn by means of the verifying party's subscriber device (not shown), is connected to telephone server 12, telephone server 12 is connected to database 8. Transaction initiator 6 in order to work with the system uses user identifier 1 recorded on a medium, and mobile telephone 9 as the subscriber device of the party authorized to make the transaction.

For the sake of simplicity in the present example the transaction initiator coincides with the authorized party, and is the owner of the subscriber device of the authorized party.

User identifier 1 medium (not shown in Figure 1) is a card with a magnetic strip, a transponder, a key to an electronic lock, a radio-key (for instance, a car alarm system transmitter).

User identifier 1 is inter alia a biometrical property of user 6 such as a fingerprint, an iris pattern etc., or a known to the transaction initiator 6 letter/number combination (token) such as a PIN, a login, or a password.

Reader device 2 is inter alia an ATM (Automated Teller Machine), a POS terminal, a lock with an electronic key, a car anti-theft system, an express payment terminal, a biometrical identification device, or a letter/number or digital combination input device. Reader device 2 can be located in an area open for access by transaction initiator 6 for user identifier 1 input, and at any distance from other elements of the system, subject to maintaining the functionality of telecommunication channel 3.

Telecommunication channel 3 is one or several interconnected wire or wireless communication lines.

Transaction digital processing device 4 is inter alia a personal computer, an industrial computer, or other computing device. Transaction digital processing device 4 can perform the following functions:
(a) to receive user identifier 1 via telecommunication channel 3 from reader device 2;
(b) to send a request to database 7 with the recognition of the identifier of the party authorized to make the transaction based on the identifier of the party initiating the transaction, i.e. on user identifier 1;
(c) to transmit the user identifier of the party authorized to make the transaction via telecommunication channel 5 to database server 8.

Transaction digital processing device 4 can be located separately from database server 8. In this case transaction digital processing device 4 is connected to database server 8 via telecommunication channel 5.

Telecommunication channel 5 is one or several wire or wireless communication line(s). Telecommunication channel 5 does not necessarily include Internet elements and/or other existing telecommunication networks.

Database 7 includes data structures in which the identifier of the party initiating the transaction (i.e. user identifier 1) is unambiguously connected with the identifier of the party authorized to make the transaction.

Database server 8 is a personal computer, an industrial computer, or other computing device. Database server 8 can perform the following functions:
(a) to receive the identifier of the party authorized to make the transaction from transaction digital processing device 4 via telecommunication channel 5;
(b) to send a request to database 13 with the recognition of the subscriber address of the party authorized to make the transaction based on the identifier of the party authorized to make the transaction;
(c) to transmit the subscriber address of the party authorized to make the transaction to the subscriber device of the verifying party 12.

It is assumed that the received subscriber address corresponds to subscriber device 9 of transaction initiator 6.

Subscriber device 9 is a telecommunication device registered in mobile communication network 10 and is a mobile telephone, or a cell telephone, or a personal digital assistant, or a personal computer equipped with a subscriber device having a subscriber address in mobile communication network 10. A mobile telephone can be directly accessed by transaction initiator 6.

Mobile communication network 10 is a cellular or a satellite communication network.

Channel of switched telephone network 11 is a stationary telephone communication network or several such networks interconnected.

Telephone server 12 is one or several modems, a personal computer with a Dialogic telephony card, an industrial computer with a Dialogic telephony card, an intellectual communication platform, or other telecommunication device which can perform the following functions:
(a) to receive the subscriber address of the party authorized to make the transaction from database server 8;
(b) to initiate an outgoing call to the received subscriber address via switched telephone network channel 11;
(c) to wait for an answer to said call;
(d) to disconnect immediately if the called user answers the call;
(e) to transmit subscriber address and the result of said call to database server 8.

Database 13 includes data structures in which the identifier of the party authorized to make the transaction unambiguously corresponds to the subscriber address of the party authorized to make the transaction.

Telephone server, database server 8, and database 13 are located in the same information environment in order to provide for the security of the transactions made.

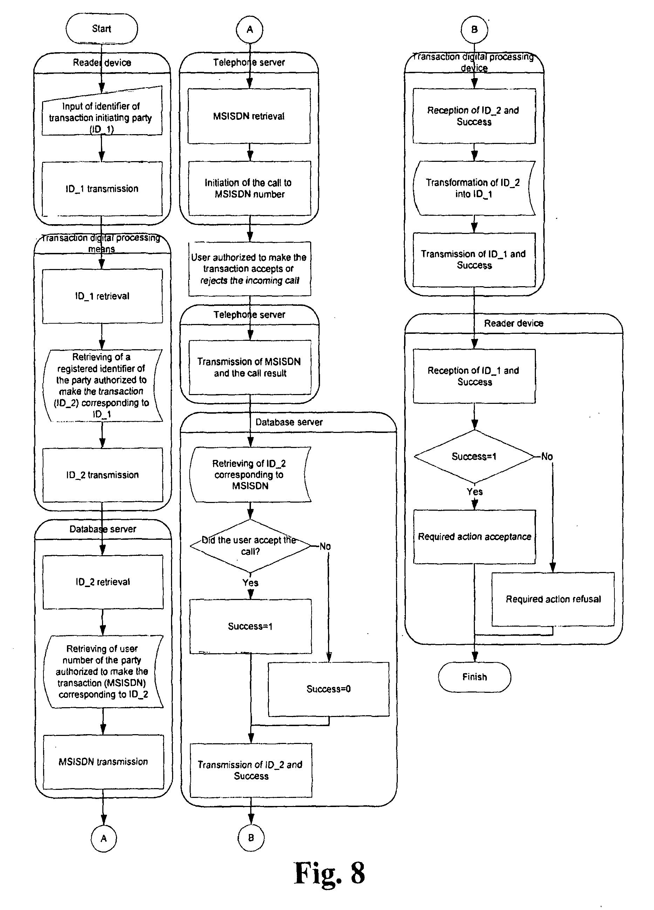

A system shown in Figure 1 functions as follows. As illustrated in Figure 8, transaction initiator 6 by means of reader device 2 enters the identifier of the party initiating the transaction (hereinafter "ID1"). Reader device 2 transmits ID1 to transaction digital processing device 4. Transaction digital processing device 4 sends a request about ID1 to database 7. Database 7 transforms ID1 into a pre-registered identifier of the party authorized to make the transaction (hereinafter "ID2"), and transmits it to transaction digital processing device 4. Transaction digital processing device 4 transmits ID2 to database server 8. Database server 8 sends a request about ID2 to database 13. Database 13 transforms ID2 into the subscriber address of the party authorized to make the transaction (hereinafter MSISDN), and transmits it to database server 8. Database server 8 transmits MSISDN to telephone server 12. Telephone server 12 initiates a call to mobile phone 9 of user 6. If user 6 rejects the incoming call from telephone server 12, then telephone server 12 transmits the result to database server 8. If user 6 accepts the incoming call from telephone server 12, then telephone server 12 immediately terminates the initiated call and transmits the result to database server 8. If the call is rejected by user 6, then database server 8 sets the Success variable to "0". If the call is accepted by user 6, then database server 8 sets the Success variable to "1". The database server sends a request about MSISDN to database 13. Database 13 transforms MSISDN into ID2 and transmits it to database server 8. Database server 8 transmits ID2 and the Success variable value to transaction digital processing device 4. Transaction digital processing device 4 sends a request about ID2 to database 7. Database 7 transforms ID2 into ID1 and transmits it to transaction digital processing device 4. Transaction digital processing device 4 sends ID1 and the Success variable value to receiving device 2.

### EXAMPLE 2

### IMPLEMENTATION OF THE TRANSACTION VERIFICATION SYSTEM FOR PLASTIC CARD OPERATIONS IN THE BANKING SECTOR

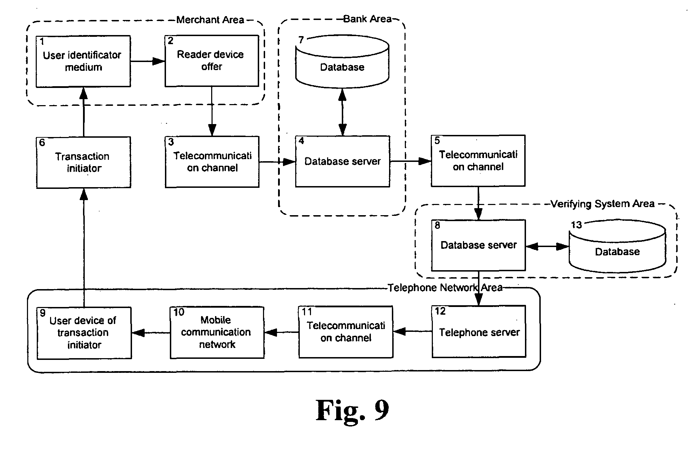

The scheme of the transaction verification system implemented for verification of operations with a plastic card as a medium for user identifier 1 is shown in Figure 9.

For the sake of simplicity it is assumed that the transaction initiator and the authorized party coincide. Transaction initiator 6 inserts a bank plastic card (a medium for user identifier 1) into the ATM (the reader device 2) located within the Merchant Area, enters the PIN and instructs the ATM to make a cash withdrawal from the transaction initiator's personal account. The ATM via telecommunication channel 3 transmits the card data to the bank processing center (transaction digital processing device 4) located in the Bank Area. Processing center 4 by means of database 7 determines ID2 using received identifier of the transaction initiator 1, and transmits ID2 via telecommunication channel 5 to database server 8. Database server 8 by means of database 13 using the received ID2 determines the subscriber address of the transaction initiator MSISDN. Database server 8 instructs telephone server 12 to make an outgoing call to the subscriber device of transaction initiator 9. Database server 8, database 13, and telephone server 12 are located in Verifying System area. Telephone server 12 with the help of the subscriber device (not shown) connected to a stationary telephone network calls the subscriber device of transaction initiator 9. An automated switched telephone network is connected to mobile communication network 10, to which the subscriber device of transaction initiator 9 is connected. The subscriber device of transaction initiator 6 should have the Caller ID service activated. The transaction initiator sees the number of the incoming call and realizes that the call is sent by the verifying party. By answering the incoming call transaction initiator 6 agrees to make the transaction; by rejecting the call (refusing to accept the call) the user prohibits the transaction.

Thereby, to receive a reply from transaction initiator 6, only the signal traffic of switched telephone network 11 is used, without any usage of a voice communication channel, and the confirmation or the refusal regarding the transaction is conveyed by the answer to the verifying party's call by the transaction initiator, or correspondingly, by the refusal to answer such a call.

For a user to be able to identify 6 different types of authorization requests, database server 8 makes an outgoing call from different subscriber addresses. For example, for a request to make a transaction for the amount of up to 5,000.00 rubles the system makes an outgoing call to the telephone of the transaction initiator from the number +7(495)123-40-00, and for transaction for the amount of up to 15,000.00 rubles the call is made from the number +7(495)123-40-02. The transaction initiator for the sake of convenience can save these numbers in the telephone memory under easily identifiable names, e.g. "A payment of up to 5,000 rubles", "A payment of up to 15,000 rubles" etc. If initiator 6 answers to the incoming call, then telephone server 12 immediately terminates this call. Following that telephone server 12 transmits to database server the status of the call made (whether or not user 6 with the corresponding MSISDN has answered the call). The result of the user's answer after the reverse transformation as shown in Figure 8 illustrating the system algorithm is transmitted to the processing center. The processing center based on the answer received from the subscriber device of transaction initiator 9 instructs the ATM whether to dispense or not, the cash requested by transaction initiator 6.

### EXAMPLE 3

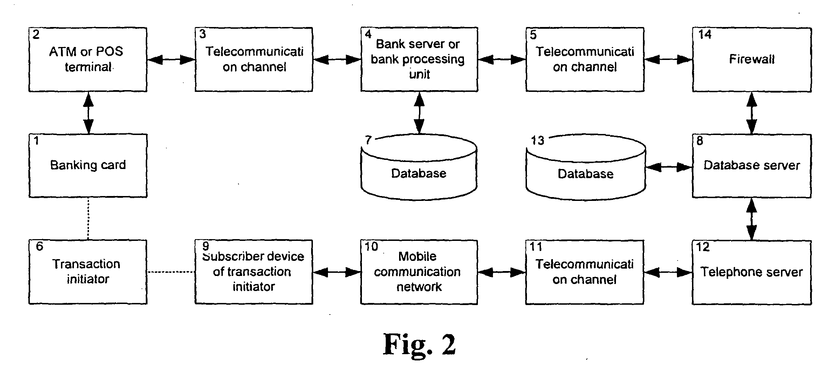

As shown in Figure 2 the invented authorization factor can be used in addition to the authorization factor recorded on a credit or a debit bank card, when the transaction initiator withdraws cash from an ATM.

### EXAMPLE 4

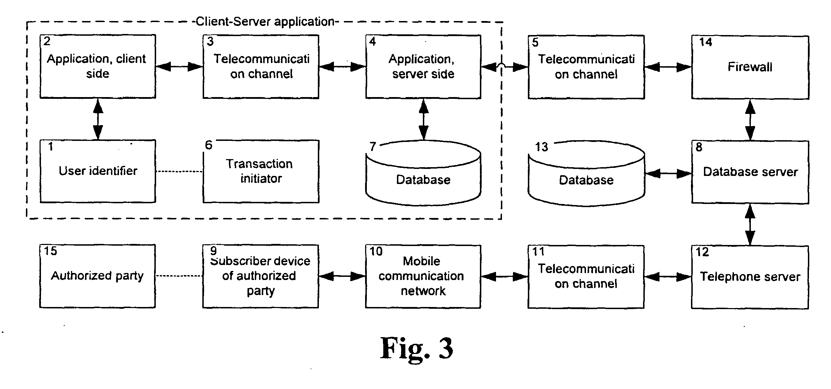

As shown in Figure 3 the invented authorization factor can be used by a small business company director to endorse the payment instructions for the company's account prepared by the accountant.

### EXAMPLE 5

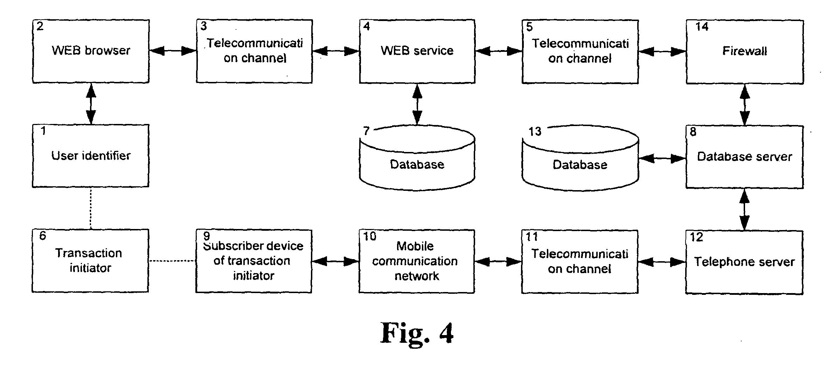

As shown in Figure 4 the invented authorization factor can be used to replace passwords for several WEB resources with one universal password with a mobile confirmation.

### EXAMPLE 6

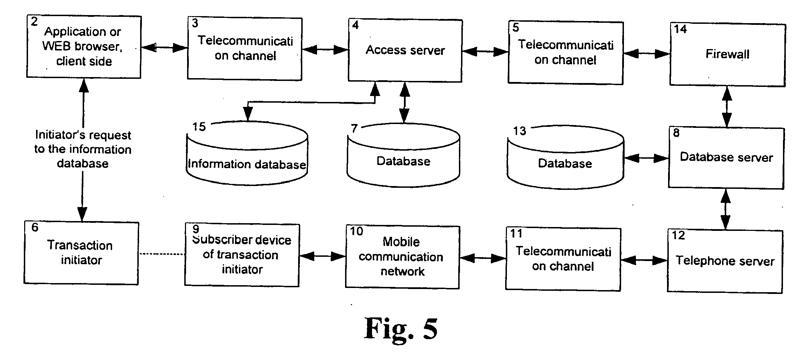

As shown in Figure 5 the invented authorization factor can be used to check whether a transaction initiator has the right to access any information systems, data storages, or any specific data within such storages.

### EXAMPLE 7

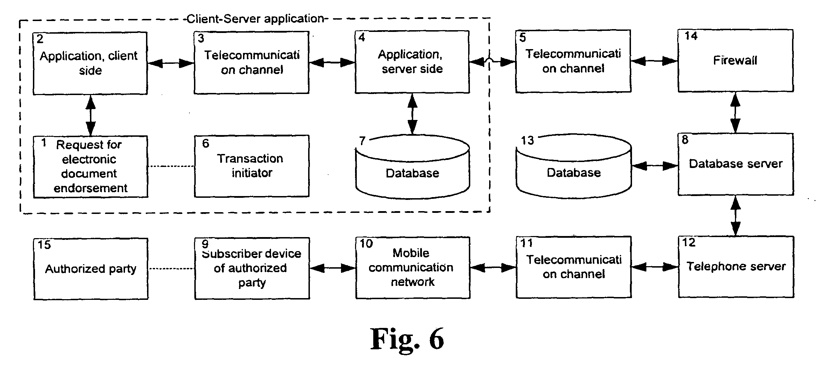

As shown in Figure 6 the invented authorization factor can be used in addition to an electronic signature for remote endorsement of digital documents by the transaction initiator.

### EXAMPLE 8

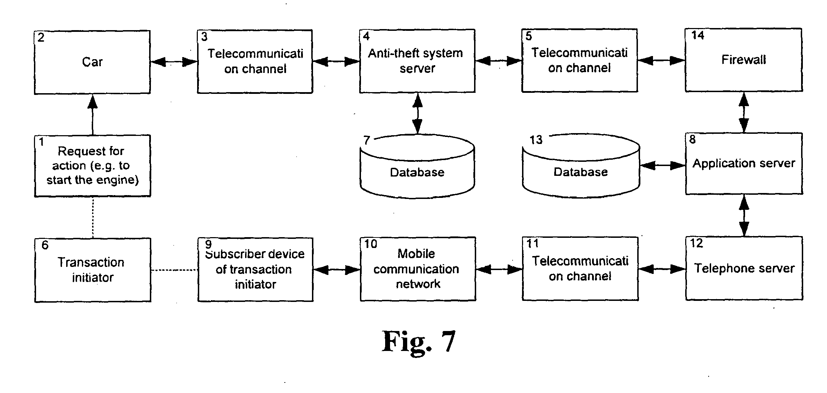

As shown in Figure 7 the invented authorization factor can be used to verify transactions resulting in switching on an electronically controlled mechanism, for example an electronic lock, a car control system, a computer power-on button, a safe equipped with an electronic lock, a VCR etc.

It will be appreciated by persons skilled in the art that numerous variations and/or modifications may be made to the invention as shown in the specific embodiments.

## Claims

1. A method for verification of the consent given by a party authorized to make a transaction (15) to a party initiating the transaction (6), comprising the steps:
(a) receiving by a party verifying the transaction the information about the transaction including the identifier (1) of the party initiating the transaction (6);
(b) identifying, by the party verifying the transaction, the address of the subscriber device (9) of the party authorized to make the transaction (15) by searching a database storage (4, 8) for a predetermined identifier of the party initiating the transaction (6), the predetermined identifier having to be identical to the identifier (1) of the party initiating the transaction (6), and by determining the corresponding predetermined address of the subscriber device (9) of the party authorized to make the transaction (15); wherein the predetermined identifier of the party initiating the transaction (6) and the predetermined address of the subscriber device (9) of the party authorized to make the transaction (15) associated therewith are stored in the database storage (4, 8); and
(c) initiating a call signal to the subscriber device (9) of the party authorized to make the transaction, from an automated switched telephone network (15) by means of a subscriber device of the party verifying the transaction;
wherein upon the recognition of an answer signal from the subscriber device (9) of the party authorized to make the transaction (15), the verifying party identifies the party authorized to make the transaction (15) as giving its consent to make the transaction, and upon the recognition of a clear-back signal from the subscriber device (9) of the party authorized to make the transaction (15), the verifying party identifies the party authorized to make the transaction (15) as refusing to make the transaction.

2. The method according to claim 1, wherein the identifier (1) of the party initiating the transaction (6) is selected from the group consisting of a personal identification number, a login, a password, a bank payment card number, a radio-frequency identifier (RFID), and a biometrical parameter.

3. The method according to any of the claims from 1 to 2, wherein the automated switched telephone network comprises at least one mobile telephone communication network or a GSM network.

4. The method according to claim 3, wherein after step (b) and before step (c) an additional message is sent to the subscriber device (9) of the party authorized to make the transaction (15), this message is selected from the group consisting of a short (SMS) message, a zero-class SMS message, a multimedia (MMS) message, and a message of the bi-directional session transmission of unstructured data of additional services (USSD), whereas the subscriber device (9) of said mobile telephone communication network can receive and display said SMS, MMS, and USSD message.

5. The method according to claim 1, wherein said subscriber device (9) of the party authorized to make the transaction (15) is a telecommunication device selected from the group consisting of a mobile telephone, a cellular telephone, a personal digital assistant, and a personal computer provided with a GSM modem.

6. The method according to claim 4, wherein said message comprises the transaction data selected from the group consisting of transaction amount, account number, currency, account balance, transaction initiation time, transaction initiation date, transaction beneficiary, and electronic digital signature imprint.

7. The method according to claim 1, wherein during step (c) a voice call or a video call is initiated.

8. The method according to claim 1, wherein the identifier (1) of the party initiating the transaction (6) is read from a device selected from the group consisting of a magnetic card reader, a barcode scanner, and a radio-frequency identifier reader.

9. The method according to claim 1, wherein the information about the transaction also includes data selected from the group consisting of transaction amount, account number, currency, account balance, transaction initiation time, transaction initiation date, transaction beneficiary, and electronic digital signature imprint.

10. The method according to claim 1, wherein the transaction to be made is selected from the group consisting of a money transfer, a transfer of securities, confirmation of authenticity of private data, and confirmation of registration at a web site.

11. The method according to claim 1, wherein the subscriber device (9) of the party authorized to make the transaction (15) comprises a device selected from the group consisting of a phonogram playback device, a pictogram display device, a letter/number identifier indication device, and combinations of the above.

12. The method according to claim 11, wherein the caller information is presented on the subscriber device (9) of the party authorized to make the transaction (15) as the phonogram, the pictogram, and/or the letter/number identifier predetermined for the caller's address.

13. An automated system for verification of the consent given by a party authorized to make a transaction (15) to a party initiating the transaction (6), the system comprising:
(a) a first database (7) arranged to be capable of accumulating of transaction data including an identifier (1) of the party initiating the transaction (6);
(b) a data storage (4) comprising said first database (7) and at least one more database (7) with a predetermined interconnected identifier of the party initiating the transaction (6), and the subscriber address of a subscriber device (9) of the party authorized to make the transaction (15);
(c) at least one subscriber device of an automated switched telephone network, the subscriber device being able to establish a connection with the subscriber device (9) of the party authorized to make the transaction (15), and transmit the caller's subscriber address, and receive clear-back and answer signals, wherein the caller's subscriber address corresponds to a subscriber device of a party verifying the transaction, and the subscriber device (9) of the party authorized to make the transaction (15) can convey information about the caller and send a clear-back and an answer signal;
(d) at least one device (2) for reading the identifier (1) of the party initiating the transaction (6); and
(e) a transaction digital processing device connected to the reader (2) of the identifier (1) of the party initiating the transaction (6), and including said data storage (4) and said subscriber device of the automated switched telephone network,
whereas said transaction digital processing device is adapted to, by means of said data storage (4), accumulate transaction information in said first database (7), and determine the subscriber address of the party authorized to make the transaction (15) according to the identifier (1) of the party initiating the transaction (6), and, by means of said subscriber device of the automated switched telephone network, initiate a connection with the subscriber device (9) of the party authorized to make the transaction (15), transmit the caller's subscriber address, and receive a clear-back and an answer signal; whereas the subscriber device (9) of the party authorized to make the transaction (15) is adapted to convey information about the caller and can send a clear-back and an answer signal,
wherein upon the recognition of an answer signal from the subscriber device (9) of the party authorized to make the transaction (15), said transaction digital processing device is adapted to identify the party authorized to make the transaction (15) as giving its consent to the transaction, and upon the recognition of a clear-back signal from the subscriber device (9) of the party authorized to make the transaction (15), said transaction digital processing device is adapted to identify the party authorized to make the transaction as refusing to make the transaction.

## Patentansprüche

1. Mittel für Verifizierung von der von einer für Durchführung einer Transaktion autorisierten Seite (15) gegebenen Akzeptanz für die Transaktion initialisierende Seite(6) schließt folgende Schritten mit ein:
(a) Erfassung von der für Verifizierung der Transaktion zuständigen Seite der Information über Transaktion inklusive Kennzeichnung (1) der Transaktion initialisierende Seite (6);
(b) Identifizierung von der für Verifizierung der Transaktion zuständigen Seite von der Adresse des Teilnehmerapparats (9) der für Durchführung einer Transaktion autorisierten Seite (15) durch Suche von einem vorgegebenem Merkmal einer Transaktion initialisierenden Seite (6) in Datenbank (4, 8), wobei der vorgegebene Merkmal dem Merkmal (1) der Transaktion initialisierenden Seite (6) identisch sein muss, und durch Definierung von einer entsprechenden vorgegebenen Adresse des Teilnehmerapparats (9) einer für Durchführung einer Transaktion autorisierten Seite (15); **dadurch gekennzeichnet, dass** der vorgegebene Merkmal einer Transaktion initialisierenden Seite (6) und eine damit vorgegebene Adresse des Teilnehmerapparats (9) einer für Durchführung einer Transaktion autorisierten Seite (15) assoziiert in Datenbank (4, 8) gespeichert sind, und
(c) Initiierung von Abrufkommando an Teilnehmerapparat (9) einer für Durchführung einer Transaktion autorisierten Seite (15) von einer automatisierten festverdrahten Telefonnetz anhand eines Teilnehmerapparats der Transaktion verifizierende Seite; wobei die verifizierende Seite gegen Erkennung des Antwortsignals vom Teilnehmerapparat (9) einer für Durchführung einer Transaktion autorisierten Seite (15) die für Durchführung einer Transaktion autorisierte Seite (15) als die Zustimmung für Durchführung einer Transaktion gebende Seite identifiziert; und gegen die Erkennung des Schlusssignals vom Teilnehmerapparat (9) einer für Durchführung einer Transaktion autorisierten Seite (15) identifiziert die verifizierende Seite eine für Durchführung einer Transaktion autorisierte Seite (15) als Ablehnung, Transaktion zu durchführen.

2. Das Mittel gemäß Anspruch 1, wo Kennzeichnung (1) der Transaktion initialisierten Seite (6), ist gewählt von der Gruppe bestehend aus dem personalen Identifikationsnummer, Login, Passwort, Kartennummer für unbare Zahlung, Radiofrequenz-Identifikation (RFID) und biometrische Parameter.

3. Das Mittel bezüglich Anspruch 1 und 2, **dadurch gekennzeichnet, dass** der automatisierende festverdrahte Telefonnetz mindestens ein Mobilnetz oder GSM-Netz einschließt.

4. Das Mittel bezüglich Anspruch 3, **dadurch gekennzeichnet, dass** nach dem Schritt (b) und vor dem Schritt (c) eine Nachricht an Teilnehmerapparat (9) der für Durchführung einer Transaktion autorisierten Seite (15), diese Nachricht wird gewählt aus einer Gruppe bestehend aus einer kurzen Nachricht (SMS), Klasse 0 SMS Nachricht, Multimedia (MMS) Nachricht und USSD-Service- und Steuerbefehle im GSM-Mobilfunknetz, **dadurch gekennzeichnet, dass** der Teilnehmerapparat (9) eines jeweiligen Kommunikationnetzwerkes SMS, MMS und USSD erhalten und darstellen kann.

5. Das Mittel gemäß Anspruch 1, **dadurch gekennzeichnet, dass** der genannte Teilnehmerapparat (9) der für Durchführung einer Transaktion autorisierten Seite (15) eine von der von Handtelefon, PDA und PC mit einer GSM-Modem bestehende Gruppe Telekommunikationsausrüstung ist.

6. Das Mittel gemäß Anspruch 4, **dadurch gekennzeichnet, dass** die oben bezeichnete Nachricht die Transaktionsdaten beinhaltet, die von der Gruppe von Betrag von Transaktion, Kontonummer, Währung, Restbestand, Zeit der Transaktionsiniziierung, Datum der Transaktionsiniziierung, Begünstigte der Transaktion und elektronische Signatur gewählt wurden.

7. Das Mittel gemäß Anspruch 1, **dadurch gekennzeichnet, dass** während des Schritts (c) Sprachwahl oder Videoanruf initiiert wird.

8. Das Mittel gemäß Anspruch 1, **dadurch gekennzeichnet, dass** die Kennzeichnung (1) der Transaktion initialisierten Seite (6) wird vom Gerät aus der Gruppe von Magnetkartenleser, Barcodescanner und elektromagnetisches Identifikationsgerät gelesen.

9. Das Mittel gemäß Anspruch 1, **dadurch gekennzeichnet, dass** Information über Transaktion auch die Dateien enthielt, die von der Gruppe von Betrag von Transaktion, Kontonummer, Währung, Restbestand, Zeit der Transaktionsiniziierung, Datum der Transaktionsiniziierung, Begünstigte der Transaktion und elektronische Signatur gewählt werden.

10. Das Mittel gemäß Anspruch 1, **dadurch gekennzeichnet, dass** die zu durchgeführte Transaktion von der Gruppe von Geldüberweisung, Wertpapierumschreibung, Bestätigung von persönlichen Daten und Bestätigung von Registrierung auf der Web-Seite gewählt wird.

11. Das Mittel gemäß Anspruch 1, **dadurch gekennzeichnet, dass** Teilnehmerapparat (9) der für Durchführung einer Transaktion autorisierten Seite (15) ein Gerät ist, das von der Gruppe von folgenden Geräten gewählt wird: Tonwiedergabeanlage, Anzeigeeinrichtung, Zeichen/Nummer-Identifikationsanlage und ihre Kombinationen.

12. Das Mittel gemäß Anspruch 11, **dadurch gekennzeichnet, dass** Information über den Anrufer im Teilnehmerapparat (9) der für Durchführung einer Transaktion autorisierten Seite (15) als ein dem Anrufer-Adresse vorgegebenes Phonogramm, Piktogramm und/oder Zeichen/Nummer-Kennzeichnung präsent ist.

13. Das automatische System für Verifizierung der von der für Durchführung einer Transaktion autorisierten Seite (15) gegebenen Zustimmung für die Transaktion initialisierende Seite (6) besteht aus folgenden Teilen:
(a) Die erste Datenbank (7), die auf solche Weise strukturiert ist, die es möglich macht, Informationen über Transaktion inklusive Kennzeichnung (1) der Transaktion initialisierende Seite (6) zu speichern;
(b) Datenspeicher (4), der die erste Datenbank (7) und mindestens noch eine Datenbank (7) mit dem vorgegebenen Merkmal einer Transaktion initialisierenden Seite (6) und Anrufer-Adresse des Teilnehmerapparats (9) der für Durchführung einer Transaktion autorisierten Seite (15);
(c) Mindestens ein Teilnehmerapparat eines automatisierenden festverdrahten Telefonnetzes, wobei der Teilnehmerapparat eine Möglichkeit hat, Verbindung mit dem Teilnehmerapparat (9) der für Durchführung einer Transaktion autorisierten Seite (15) zu herstellen und Anrufer-Adresse zu senden sowie Schlusssignal und Antwortsignal zu bekommen, **dadurch gekennzeichnet, dass** die Anrufer-Adresse der Adresse des Teilnehmerapparats (9) der für Durchführung einer Transaktion autorisierten Seite (15)zustimmt und Information über Anrufer sowie Schlusssignal und Antwortsignal vermitteln kann;
(d) Mindestens eine Anlage (2) für das Lesen der Kennzeichnung (1) einer Transaktion iniziirenden Seite (6); und
(e) Anlage für digitale Verarbeitung der Transaktion, angeschlossen zur Leseanlage (2) für das Lesen der Kennzeichnung (1) der Transaktion iniziirenden Seite (6) sowie einen erwähnten Datenspeicher (4) und ein erwähntes Teilnehmerapparat eines automatisierenden festverdrahten Telefonnetzes,
**dadurch gekennzeichnet, dass** die Anlage für digitale Verarbeitung der Transaktion mit Hilfe vom Datenspeicher (4) für Speicherung von Transaktionsinformation in die erste Datenbank (7) und für Festsetzung der Anrufer-Adresse der für Durchführung einer Transaktion autorisierten Seite (15) gemäß der Kennzeichnung (1) der Transaktion initiirenden Seite (6) angepasst ist, und, mit Hilfe des obenerwähnten Teilnehmerapparats eines automatisierenden festverdrahten Telefonnetzes, eine Verbindung mit dem Teilnehmerapparat (9) der für Durchführung einer Transaktion autorisierten Seite (15) initiieren, die Anrufer-Adresse übergeben sowie Schlusssignal und Antwortsignal erhalten; **dadurch gekennzeichnet, dass** der Teilnehmerapparat (9) der für Durchführung einer Transaktion autorisierten Seite (15) dafür angepasst ist, Information über Anrufer zu übergeben und Schlusssignal und Antwortsignal zu senden,
wobei, gegen Identifikation des Antwortsignals vom Teilnehmerapparat (9) der für Durchführung einer Transaktion autorisierten Seite (15), diese Anlage für digitale Verarbeitung der Transaktion angepasst ist, die für Durchführung einer Transaktion autorisierte Seite (15) als ihre Zustimmung für Transaktion gebende zu identifizieren; und nach Identifizierung des Schlusssignals und Antwortsignals vom Teilnehmerapparat (9) der für Durchführung einer Transaktion autorisierten Seite (15) hat diese Anlage für digitale Verarbeitung der Transaktion die Transaktion als Ablehnung der Transaktion zu identifizieren.

## Revendications

1. Une méthode de vérification du consentement donné par une partie autorisée à effectuer une transaction (15) à une partie qui engage la transaction (6) comprenant les étapes suivantes :
(a) réception par une partie vérifiant la transaction des informations de transaction comprenant l'identifiant (1) de la partie engageant la transaction (6) ;
(b) l'identification, par la partie qui vérifie la transaction, de l'adresse du dispositif d'abonné (9) de la partie autorisée à effectuer la transaction (15) en recherchant dans un système de stockage de base de données (4, 8) pour un identifiant prédéterminé de la partie qui initialise la transaction (6), l'identifiant prédéterminé qui doit être identique à l'identifiant (1) de la partie qui engage la transaction (6), et en déterminant l'adresse prédéfinie correspondante du dispositif d'abonné de la partie qui est autorisée à effectuer la transaction (15) ; l'identifiant prédéterminé de la partie qui engage la transaction (6) et l'adresse prédéterminée de l'dispositif d'abonné de la partie autorisée à effectuer la transaction (15) associée sont stockés dans le système de stockage de la base de données (4, 8) ; et
(c) la création d'un signal d'appel vers le dispositif d'abonné (9) de la partie autorisée à effectuer la transaction à partir d'un réseau téléphonique commuté (15) grâce à un dispositif d'abonné de la partie qui vérifie la transaction ; lors de la reconnaissance d'un signal de réponse du dispositif d'abonné (9) de la partie autorisée à effectuer la transaction (15), la partie qui vérifie interprète ce signal comme le consentement de la partie autorisée à effectuer la transaction (15) pour engager la transaction. Si le signal reconnu est un signal de raccrochage du dispositif d'abonné (9) de la partie autorisée à effectuer la transaction (15), la partie qui vérifie identifie cette réponse comme un refus de partie autorisée à effectuer la transaction (15) à engager la transaction.

2. Selon le Point 1., la méthode selon laquelle l'identifiant (1) de la partie engageant la transaction (6) est sélectionné à partir d'un numéro d'identification personnelle, d'un login, d'un mot de passe, d'un numéro de carte bancaire, d'un identifiant de fréquence- radio (FRID), et d'un paramètre biométrique.

3. Selon les Points 1. et 2., la méthode selon laquelle le réseau téléphonique commuté comprend au moins un réseau de communication téléphonique mobile ou un réseau GSM.

4. Selon le Point 3., la méthode selon laquelle après l'étape (b) mais avant l'étape (c) un message supplémentaire est envoyé au dispositif d'abonné (9) de la partie autorisée à effectuer la transaction (15), ce message est sélectionné à partir d'un groupe comprenant un message court (SMS), un message SMS de classe-zéro (Flash SMS), un message multimédia (MMS) et un message de transmission de session bidirectionnelle de service de données sans mémoire (protocole USSD), attendu que le dispositif d'abonné (9) du dit réseau de communication téléphonique mobile peut récupérer et afficher les dits SMS, MMS et message USSD.

5. Selon le Point 1., la méthode selon laquelle le dit dispositif d'abonné (9) de la partie autorisée à effectuer la transaction (15) est un dispositif de télécommunication sélectionné à partir d'un groupe comprenant un téléphone mobile, un téléphone cellulaire, un appareil numérique portable et un ordinateur personnel fourni avec un modem GSM.

6. Selon le Point 4., la méthode selon laquelle le dit message comprend les données de transaction sélectionnées à partir d'un ensemble comprenant le montant de la transaction, le numéro de compte, la devise, le solde du compte, l'heure de transaction, le bénéficiaire de la transaction et l'empreinte électronique de signature numérique.

7. Selon le Point 1., la méthode selon laquelle durant l'étape (c) un appel-voix ou vidéo est initialisé.

8. Selon le Point 1., la méthode selon laquelle l'identifiant (1) de la partie engageant la transaction (6) est lu à partir d'un appareil sélectionné parmi un lecteur de carte magnétique, un scanner de code barres et un lecteur d'identification par radio fréquence.

9. Selon le Point 1., la méthode selon laquelle les informations de transaction comprennent également des données sélectionnées parmi le montant de la transaction, le numéro de compte, la devise, le solde du compte, l'heure de transaction, la date de transaction, le bénéficiaire de la transaction, l'empreinte électronique de signature numérique.

10. Selon le Point 1., la méthode selon laquelle la transaction à effectuer est sélectionnée parmi le virement, le transfert de titres, la confirmation de l'authenticité de données privées, la confirmation d'enregistrement à un site web.

11. Selon le Point 1., la méthode selon laquelle le dispositif d'abonné (9) de la partie autorisée à effectuer la transaction (15) inclut un appareil de lecture de phonogrammes, ou un appareil d'affichage de pictogrammes ou un dispositif d'identifiant alphanumérique ou une combinaison des trois.

12. Selon le Point 11., une méthode selon laquelle, les informations concernant l'appelant sont affichées le dispositif d'abonné (9) de la partie autorisée à effectuer à la transaction (15) sous forme de phonogramme, de pictogramme et/ou d'identifiant alphanumérique préalablement enregistré pour l'adresse de l'appelant.

13. Un système automatique pour la vérification du consentement donné par la partie autorisée à effectuer la transaction (15) à la partie engageant la transaction (6), ce système comprend :
(a) une première base de données (7) organisée pour être capable de compiler des données de transaction telles qu'un identifiant (1) de la partie engageant la transaction (6) ;
(b) un stockage des données comprenant la dite première base de données (7) et au moins une base de données supplémentaire (7) avec un identifiant interconnecté enregistré au préalable de la partie engageant la transaction (6), et l'adresse de souscription du dispositif d'abonné (9) de la partie autorisée à effectuer la transaction (15) ;
(c) au moins un dispositif d'abonné d'un réseau téléphonique commuté, le dispositif d'abonné étant capable d'établir une connexion avec le dispositif d'abonné (9) de la partie autorisée à effectuer la transaction, et de transmettre l'adresse de souscription de l'appelant et de recevoir des signaux de raccrochage et de réponse ; l'adresse de souscription de l'appelant correspond au dispositif d'abonné d'une partie vérifiant la transaction et le dispositif d'abonné (9) de la partie autorisée à effectuer la transaction (15) peut transmettre les informations de l'appelant et envoyer un signal de raccrochage ou de réponse ;
(d) au moins un dispositif (2) de lecture de l'identifiant (1) de la partie engageant la transaction (6) ; et
(e) un dispositif de traitement numérique de transaction connecté au lecteur (2) de l'identifiant (1) de la partie engageant la transaction (6) et incluant le dit stockage de données (4) et le dit dispositif d'abonné du réseau téléphonique commuté ;
attendu que le dit dispositif de traitement numérique de la transaction est adapté par le stockage de données (4) pour accumuler les information de transaction dans la dite première base de donnée (7) et détermine l'adresse de souscription de la partie autorisée à effectuer la transaction (15) en accord avec l'identifiant (1) de la partie engageant la transaction (6) et, grâce au dit dispositif d'abonné du réseau téléphonique commuté initialise la connexion avec le dispositif d'abonné (9) de la partie autorisée à effectuer la transaction (15), transmet l'adresse de souscription de l'appelant et reçoit un signal de raccrochage ou de réponse ; attendu que le dispositif de d'abonné (9) de la partie autorisée à effectuer la transaction (15) est adapté pour transmettre les informations de l'appelant et peut envoyer un signal de raccrochage ou de réponse,
attendu que lors de la reconnaissance d'un signal de réponse de la part du dispositif d'abonné (9) de la partie autorisée à effectuer la transaction (15), le dit dispositif de traitement numérique de la transaction est capable d' identifier le partie autorisée à effectuer la transaction (15) comme donnant son consentement pour la transaction et que lors de la reconnaissance d'un signal de raccrochage de la part du dispositif d'abonné (9) de la partie autorisée à effectuer la transaction (15), le dit dispositif de traitement numérique de la transaction identifiera que la partie autorisée à effectuer la transaction refuse de faire la transaction.
